(19) Europäisches Patentamt
European Patent Office
Office européen des brevets

(11) **EP 4 503 360 A1**

(12) **EUROPÄISCHE PATENTANMELDUNG**

(43) Veröffentlichungstag:
**05.02.2025 Patentblatt 2025/06**

(21) Anmeldenummer: **23200440.8**

(22) Anmeldetag: **28.09.2023**

(51) Internationale Patentklassifikation (IPC):
*H02H 3/08* (2006.01)    *H01H 9/54* (2006.01)
*H01H 9/56* (2006.01)    *H02H 5/04* (2006.01)
*H02H 7/22* (2006.01)

(52) Gemeinsame Patentklassifikation (CPC):
**H02H 3/08; H01H 9/548; H01H 9/56; H02H 5/04;
H02H 7/222**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **02.08.2023 DE 102023207405**

(71) Anmelder: **Siemens Aktiengesellschaft
80333 München (DE)**

(72) Erfinder: **Tannhäuser, Marvin
91353 Hausen (DE)**

(74) Vertreter: **Siemens Patent Attorneys
Postfach 22 16 34
80506 München (DE)**

(54) **SCHUTZSCHALTGERÄT UND VERFAHREN**

(57) Die Erfindung betrifft ein Schutzschaltgerät zum Schutz eines elektrischen Mehrphasen-Niederspannungswechselstromkreises aufweisend:
- Serienschaltungen eines mechanischen Phasen-Kontaktes (und eines elektronischen Schalters,
wobei jeweils eine Serienschaltung einen netzseitigen Phasen-Anschluss mit einen lastseitigen Phasen-Anschluss elektrisch verbindet,
- dass die mechanischen Phasen-Kontakte zur Vermeidung eines Stromflusses gemeinsam geöffnet oder für einen Stromfluss gemeinsam geschlossen werden können,
- dass die elektronischen Schalter mittels halbleiterbasierter Schaltelemente in einen hochohmigen Zustand der Schaltelemente zur Vermeidung eines Stromflusses oder einen niederohmigen Zustand der Schaltelemente zum Stromfluss geschaltet werden können,
- dass die elektronischen Schalter unabhängig voneinander in einen hochohmigen oder niederohmigen Zustand geschaltet werden können, um einen phasenleiterabhängigen Stromfluss zu vermeiden oder zu ermöglichen,
- dass für jede Serienschaltung jeweils mindestens ein Temperatursensor vorgesehen ist,
insbesondere zur jeweiligen Ermittlung der Höhe der Temperatur des jeweiligen elektronischen Schalters, insbesondere des halbleiterbasierten Schaltelementes,
- dass bei Überschreitung eines ersten Temperaturschwellwertes eines Temperatursensors einer Serienschaltung der elektronische Schalter der Serienschaltung in einen hochohmigen Zustand zur Vermeidung eines Stromflusses geschaltet wird, um eine Überhitzung zu vermeiden.

FIG 1

EP 4 503 360 A1

**Beschreibung**

Unabhängig vom grammatikalischen Geschlecht eines bestimmten Begriffes sind Personen mit männlicher, weiblicher oder anderer Geschlechteridentität mit umfasst.

Die Erfindung betrifft das technische Gebiet eines Schutzschaltgerätes für einen Niederspannungsstromkreis mit elektronischen Schaltern und ein Verfahren für ein Sch-utzschaltgerät für einen Niederspannungsstromkreis mit elektronischen Schaltern.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungsoder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter. Die Nennströme können sich weiter staffeln, von 0,5 A über 1 A, 2 A, 3 A, 4 A, 5 A, 6 A, 7 A, 8 A, 9 A, 10 A, usw. bis 16 A.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit bzw. einem elektronischen Schalter sind relativ neuartige Entwicklungen. Diese weisen eine halbleiterbasierte elektronische Unterbrechungseinheit / Schalter auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit / Schalter weisen ferner häufig eine mechanische Trennkontakteinheit auf, insbesondere mit Trennereigenschaften gemäß einschlägigem Normen für Niederspannungsstromkreise, wobei die Kontakte der mechanischen Trennkontakteinheit in Serie zur elektronischen Unterbrechungseinheit / elektronischen Schaltern geschaltet sind, d.h. der Strom des zu schützenden Niederspannungsstromkreises wird sowohl über die mechanische Trennkontakteinheit / den mechanischen Kontakt als auch über die elektronische Unterbrechungseinheit / den elektronischen Schalter geführt.

Die vorliegende Erfindung bezieht sich insbesondere auf Niederspannungswechselstromkreise, mit einer Wechselspannung, üblicherweise mit einer zeitabhängigen sinusförmigen Wechselspannung mit der Frequenz f. Die zeitliche Abhängigkeit des momentanen Spannungswertes u(t) der Wechselspannung ist durch die Gleichung:

$$u(t) = U * \sin (2\pi * f * t)$$

beschrieben. Wobei:

u(t) = momentaner Spannungswert zu der Zeit t
U = Amplitude der Spannung

Eine harmonische Wechselspannung lässt sich durch die Rotation eines Zeigers darstellen, dessen Länge der Amplitude (U) der Spannung entspricht. Die Momentanauslenkung ist dabei die Projektion des Zeigers auf ein Koordinatensystem. Eine Schwingungsperiode entspricht einer vollen Umdrehung des Zeigers und dessen Vollwinkel beträgt 2n (2Pi) bzw. 360°. Die Kreisfrequenz ist die Änderungsrate des Phasenwinkels dieses rotierenden Zeigers. Die Kreisfrequenz einer harmonischen Schwingung beträgt immer das $2\pi$-fache ihrer Frequenz, d.h.:

$$\omega = 2\pi * f = 2\pi/T = \text{Kreisfrequenz der Wechselspannung}$$

(T = Periodendauer der Schwingung)

Häufig wird die Angabe der Kreisfrequenz ($\omega$) gegenüber der Frequenz (f) bevorzugt, da sich viele Formeln der Schwingungslehre aufgrund des Auftretens trigonometrischer Funktionen, deren Periode per Definition 2n ist, mit Hilfe der Kreisfrequenz kompakter darstellen lassen:

$$u(t) = U * \sin(\omega t)$$

Im Falle zeitlich nicht konstanter Kreisfrequenzen wird auch der Begriff momentane Kreisfrequenz verwendet.

Bei einer sinusförmigen, insbesondere zeitlich konstanten, Wechselspannung entspricht der zeitabhängige Wert aus der Winkelgeschwindigkeit $\omega$ und der Zeit t dem zeitabhängigen Winkel $\varphi(t)$, der auch als Phasenwinkel $\varphi(t)$ bezeichnet wird. D.h. der Phasenwinkel $\varphi(t)$ durchläuft periodisch den Bereich 0...$2\pi$ bzw. 0°...360°. D.h. der Phasenwinkel nimmt periodisch einen Wert zwischen 0 und 2n bzw. 0° und 360° an ($\varphi = n* (0...2n)$ bzw. $\varphi = n* (0°...360°)$), wegen Periodizität; verkürzt: $\varphi = 0...2\pi$ bzw. $\varphi = 0°...360°$).

Mit momentanem Spannungswert u(t) ist folglich der momentane Wert der Spannung zum Zeitpunkt t, d.h. bei einer sinusförmigen (periodischen) Wechselspannung der Wert der Spannung zum Phasenwinkel $\varphi$ gemeint ($\varphi = 0...2\pi$ bzw. $\varphi = 0°...360°$, der jeweiligen Periode). Analoges gilt bezüglich momentaner Stromwerte i(t) etc.

Aufgabe der vorliegenden Erfindung ist es, ein Schutzschaltgerät eingangs genannter Art zu verbessern, insbesondere eine Zerstörung, eine Beschädigung oder einen unzulässigen Betriebszustand (insbesondere eine unzulässige Betriebstemperatur) eines mehrphasigen Schutzschaltgerätes zu vermeiden.

Diese Aufgabe wird durch ein Schutzschaltgerät mit den Merkmalen des Patentanspruchs 1, sowie durch ein Verfahren gemäß Patentanspruch 17 gelöst.

Erfindungsgemäß wird ein Schutzschaltgerät zum Schutz eines elektrischen Mehrphasen-Niederspannungswechselstromkreises, insbesondere Dreiphasen-Wechselstromkreises, vorgeschlagen, aufweisend:

- ein Gehäuse, mit netzseitigen Phasen-Anschlüssen und lastseitigen Phasen-Anschlüssen für Phasen-Leiter des Niederspannungswechselstromkreises (zum Anschluss externer Leiter an die Anschlüsse des Gehäuses),
- Serienschaltungen eines mechanischen Phasen-Kontaktes und eines elektronischen Schalters,
    wobei jeweils eine Serienschaltung einen der netzseitigen Phasen-Anschlüsse mit einen der lastseitigen Phasen-Anschlüsse elektrisch verbindet,
- dass die mechanischen Phasen-Kontakte zur Vermeidung eines Stromflusses gemeinsam zum Öffnen oder für einen Stromfluss gemeinsam zum Schließen schaltbar sind, insbesondere sind die mechanischen Kontakte über eine mechanische Kopplung miteinander verbunden,
- dass die elektronischen Schalter mittels halbleiterbasierter Schaltelemente in einen hochohmigen Zustand der Schaltelemente zur Vermeidung eines Stromflusses oder einen niederohmigen Zustand der Schaltelemente zum Stromfluss schaltbar sind,
- dass die elektronischen Schalter unabhängig voneinander in einen hochohmigen oder niederohmigen Zustand schaltbar sind,
- dass für jede Serienschaltung jeweils mindestens ein Temperatursensor vorgesehen ist (so dass jede Serienschaltung mindestens einen Temperatursensor aufweist),

    insbesondere zur jeweiligen Ermittlung der Höhe der Temperatur des jeweiligen elektronischen Schalters, insbesondere des halbleiterbasierten Schaltelementes,
    speziell ist der mindestens eine Temperatursensor der Serienschaltung beim (z.B. an oder in oder im Bereich des) elektronischen Schalter, insbesondere beim (z.B. an oder in oder im Bereich des) halbleiterbasierten Schaltelement vorgesehen,

- dass das Schutzschaltgerät derart ausgestaltet ist,
    dass bei Überschreitung eines ersten Temperaturschwellwertes eines Temperatursensors einer Serienschaltung der elektronische Schalter der Serienschaltung in einen hochohmigen Zustand zur Vermeidung eines Stromflusses geschaltet wird, um eine Überhitzung (allgemein) des Schutzschaltgerätes / (spezieller) des elektronischen Schalters (bzw. dessen halbleiterbasierter Schaltelemente) zu vermeiden.

Mit Vermeidung der Überhitzung ist gemeint, dass das Schutzschaltgerät, insbesondere die elektronischen Schalter / spezieller die halbleiterbasierten Schaltelemente, innerhalb seiner (ihrer) zulässigen thermischen Grenzen bzw. zulässigen (Geräte-)Temperaturen bleibt.

Die Temperatursensoren können mit einer Steuerungseinheit verbunden sein, die wiederum mit den gemeinsam geschalteten mechanischen Kontakten und den elektronischen Schaltern verbunden ist.

Dies hat den Vorteil, dass eine Überhitzung des Schutzschaltgerätes, insbesondere der elektronischen Schalter, vermieden wird. So kann eine thermische Überlastung oder thermische Zerstörung abgewendet werden. Durch die Vermeidung des Stromflusses wird eine Erwärmung des Schutzschaltgerätes / des jeweiligen elektronischen Schalters vermieden und ein sicherer Zustand hergestellt.

Weitere vorteilhafte Ausgestaltungen der Erfindung sind in den Unteransprüchen und im Ausführungsbeispiel angegeben.

In einer vorteilhaften Ausgestaltung der Erfindung werden bei Überschreitung eines ersten Temperaturschwellwertes eines Temperatursensors einer Serienschaltung alle elektronischen Schalter in einen hochohmigen Zustand zur Vermeidung eines Stromflusses geschaltet, um eine Überhitzung zu vermeiden. Dies hat den besonderen Vorteil, dass ein Verhalten zu klassischen Leitungsschutzschaltern gegeben ist und insbesondere alle Phasenleiter zur Vermeidung eines Stromflusses geschaltet sind, was insbesondere für 3-phasige Verbraucher von Vorteil ist. Ferner kann sich das Schutzschaltgerät durch den fehlenden Stromfluss der anderen Serienschaltungen schneller abkühlen.

In einer vorteilhaften Ausgestaltung der Erfindung ist für jede Serienschaltung jeweils eine Stromsensoreinheit vorgesehen, zur jeweiligen Ermittlung der Höhe des Stromes des jeweiligen Phasen-Leiters, insbesondere derart, dass momentane Stromwerte (ermittelt werden und) vorliegen.

Es ist eine Steuerungseinheit vorgesehen, die mit den Stromsensoreinheiten, den Temperatursensoren, den (gemeinsam geschalteten) mechanischen Phasen-Kontakten und den elektronischen Schaltern verbunden ist. Das Schutzschaltgerät ist derart ausgestaltet, dass bei Überschreitung mindestens eines ersten Stromschwellwertes in einem Phasen-Leiter eine Vermeidung eines Stromflusses des betreffenden Phasen-Leiters, insbesondere für eine erste Zeitdauer, durch den betreffenden elektronischen Schalter initiiert wird,

Dies hat den besonderen Vorteil, dass bei Überschreitung einer festgelegten Stromschwelle bzw. eines Strom-Zeitschwellwertes (d.h. der Stromschwellwert wird für ein definiertes Zeitlimit überschritten) eine selektive Unterbrechung nur des betroffenen Leiters erfolgt (bzw. der betreffenden Leiter). In den anderen Leitern (nicht betroffenen Leitern) in einem mehrphasigen Niederspannungswechselstromkreis wird weiterhin ein Stromfluss ermöglicht.

Durch die Vermeidung für eine erste Zeitdauer erfolgt vorteilhaft ein Wiedereinschalten bzw. niederohmig werden nach der ersten Zeitdauer, so dass die Versorgungssicherheit weiter gewährleistet wird bzw. auf das Vorliegen der Überschreitung der Stromschwelle weiter geprüft werden kann. Insbesondere durch die Auswertung von Momentanwerten der Höhe des Stromes kann dies vorteilhaft durchgeführt werden.

In einer vorteilhaften Ausgestaltung der Erfindung ist die erste Zeitdauer kleiner als 20 ms, insbesondere kleiner als 10 ms.

Dies hat den besonderen Vorteil, dass für eine Halbwelle bzw. Vollwelle der Spannung bzw. des Stromes im Wechselstromkreis, im Beispiel (20ms, 10ms) bezogen auf eine Netzfrequenz von 50 Hz, eine Unterbrechung erfolgt, so dass mit der nächsten Voll- bzw. Halbwelle die elektrische Versorgungssicherheit wieder gegeben wird. Insbesondere kann nach einer Unterbrechung das niederohmig werden im Bereich des nächsten Nulldurchganges (im Nulldurchgang, bzw. im Bereich von 1ms davor oder danach) erfolgen.

In einer vorteilhaften Ausgestaltung der Erfindung sind die mechanischen Phasen-Kontakte Teil einer mechanischen Trennkontakteinheit, die die Phasen-Kontakte gemeinsam öffnet oder schließt. Insbesondere weist die mechanische Trennkontakteinheit eine am Schutzschaltgerät zugängliche Handhabe auf, zum manuellen Öffnen oder Schließen der Phasen-Kontakte (der mechanischen Trennkontakteinheit).

Dies hat den besonderen Vorteil, dass eine komplette galvanische Trennung aller Phasen-Leiter gleichzeitig vollzogen wird, im Gegensatz zu einem phasenbezogenen stromflussvermeidenden hochohmig werden der elektronischen Schalter. Durch die Handhabe wird ein kompatibles Verhalten gemäß klassischer elektromechanischer Schutzschaltgeräte ermöglicht.

In einer vorteilhaften Ausgestaltung der Erfindung ist das Schutzschaltgerät derart ausgestaltet, dass die mechanische Trennkontakteinheit durch die Steuerungseinheit geöffnet, aber nicht geschlossen werden kann. Insbesondere ist ein Schließen der mechanischen Trennkontakteinheit durch die Handhabe erst nach einer Freigabe durch die Steuerungseinheit möglich.

Dies hat den besonderen Vorteil, dass eine erhöhte Sicherheit des Schutzschaltgerätes gegeben ist, da die Steuerungseinheit die Kontakte nicht versehentlich (fehlerhaft) schließen kann.

In einer vorteilhaften Ausgestaltung der Erfindung sind die elektronischen Schalter Teil einer elektronischen Unterbrechungseinheit, wobei die elektronischen Schalter unabhängig voneinander schaltbar sind.

Dies hat den besonderen Vorteil, dass eine kompakte elektronische Unterbrechungseinheit gegeben ist, die die elektronischen Schalter zusammenfasst, so dass ein raumsparendes Design ermöglicht wird und Synergieeffekte von Komponenten genutzt werden können.

In einer vorteilhaften Ausgestaltung der Erfindung weist die elektronische Unterbrechungseinheit / die elektronischen Schalter eine bidirektionale Spannungsfestigkeit auf. Insbesondere ist ein Überspannungsschutz für die halbleiterbasierten Schaltelemente vorgesehen.

Dies hat den besonderen Vorteil, dass eine Robustheit gegen Überspannungen gegeben ist und die Abschaltung eines induktiven Leitungskreises möglich ist.

In einer vorteilhaften Ausgestaltung der Erfindung sind die mechanischen Phasen-Kontakte den lastseitigen Phasen-Anschlüssen und die elektronischen Schalter den netzseitigen Phasen-Anschlüssen zugeordnet.

Dies hat den besonderen Vorteil, dass ein vorteilhaftes Design gegeben ist, das ein phasenbezogenes Schalten der elektronischen Schalter unterstützt, sowie einen Selbsttest (insbesondere einen Selbsttest der elektronischen Schalter bzw. der elektronischen Unterbrechungseinheit), auch bei geöffneten Kontakten, ermöglicht. Ferner wird eine Energieversorgung des Schutzschaltgerätes, auch bei geöffneten Kontakten, sichergestellt. So ist eine Struktur für ein Schutzschaltgerät gegeben, bei der eine Funktionsfähigkeit des Schutzschaltgerätes auch bei geöffneten Kontakten gegeben ist.

In einer vorteilhaften Ausgestaltung der Erfindung ist ein netzseitiger Neutralleiter-Anschluss und ein lastseitiger Neutralleiter-Anschluss vorgesehen, für einen Neutralleiter des Mehrphasen-Niederspannungswechselstromkreises.

Der netzseitige Neutralleiter-Anschluss ist direkt oder über einen mechanischen Neutralleiter-Kontakt mit dem lastseitigen Neutralleiter-Anschluss verbunden.

Dies hat den besonderen Vorteil, dass ein mehrpoliges Schutzschaltgerät gegeben ist, bei dem gegebenenfalls auch der Neutralleiter galvanisch unterbrochen wird.

In einer vorteilhaften Ausgestaltung der Erfindung ist der mechanische Neutralleiter-Kontakt gemeinsam mit den Phasen-Kontakten öffenbar oder schließbar (schaltbar). Der mechanische Neutralleiter-Kontakt wird gemeinsam mit den mechanischen Phasen-Kontakten geschaltet. Insbesondere wird vor dem Schließen der Phasen-Kontakte der Neutralleiter-Kontakt geschlossen oder nach dem Öffnen der Phasen-Kontakte der Neutralleiter-Kontakt geöffnet.

Dies hat den besonderen Vorteil, dass der Neutralleiter-Kontakt stets stromlos öffnet und schließt. Dies verringert den Verschleiß des Kontaktes und erhöht die Lebensdauer. Des Weiteren wird hierdurch das Auftreten eines Lichtbogens beim Öffnen des Neutralleiter-Kontaktes vermieden.

In einer vorteilhaften Ausgestaltung der Erfindung werden bei einem initiierten hochohmigen Zustand des elektronischen Schalters zur Vermeidung der Überhitzung und bei Überschreitung eines höheren zweiten Temperaturschwellwertes (d.h. der zweite der Temperaturschwellwert ist höher als der erste Temperaturschwellwert) die mechanischen Kontakte geöffnet.

Dies hat den besonderen Vorteil, dass eine weitere Sicherheit im Schutzschaltgerät vorgesehen ist. Wenn trotz initiierten hochohmigen elektronischen Schalter eine steigende Erwärmung vorliegt, könnte dies darauf zurückzuführen sein, dass der elektronische Schalter nicht bzw. nicht ausreichend hochohmig ist und ein (fehlerhafter) Stromfluss zur weiteren Erwärmung des Schutzschaltgerätes führt. In diesem Fall werden die Kontakte geöffnet, um eine galvanische Trennung zu erreichen und somit den Stromfluss komplett zu vermeiden. Durch diese weitere Sicherheitsmaßnahme wird eine Zerstörung des Schutzschaltgerätes abgewendet.

In einer vorteilhaften Ausgestaltung der Erfindung wird bei einem hochohmigen Zustand des elektronischen Schalters zur Vermeidung der Überhitzung und Unterschreitung eines dritten Temperaturschwellwertes der elektronische Schalter in einen niederohmigen Zustand (für einen Stromfluss im Niederspannungsstromkreis) geschaltet. Der dritte Temperaturschwellwert ist kleiner als der erste Temperaturschwellwert.

Dies hat den besonderen Vorteil, dass nach einer Abkühlung des Schutzschaltgerät, insbesondere des elektronischen Schalters, ein Stromfluss wieder ermöglicht wird. So ist das Schutzschaltgerät immer in einem sicheren Betriebszustand.

In einer vorteilhaften Ausgestaltung der Erfindung kann alternativ bei einem hochohmigen Zustand des elektronischen Schalters zur Vermeidung der Überhitzung und Ablauf einer ersten Zeitspanne seit Eintreten des hochohmigen Zustandes des elektronischen Schalters (zur Vermeidung der Überhitzung) der elektronische Schalter in den niederohmigen Zustand (für einen Stromfluss im Niederspannungsstromkreis) geschaltet werden.

Die erste Zeitspanne kann beispielsweise in der Größenordnung von 5 Minuten, 10 Minuten, 15 Minuten, 20 Minuten, 25 Minuten oder 30 Minuten liegen.

Dies hat den besonderen Vorteil, dass eine feste Abkühlzeit (erste Zeitspann) implementiert wird. Nach einer Abkühlung des Schutzschaltgerätes, insbesondere des elektronischen Schalters, wird ein Stromfluss wieder ermöglicht.

In einer vorteilhaften Ausgestaltung der Erfindung werden bei einem eine erste Anzahl überschreitenden Wechsel in den hochohmigen Zustand zur Vermeidung der Überhitzung (und zurück in den niederohmigen Zustand) innerhalb eines ersten Zeitrahmens die mechanischen Kontakte geöffnet.

Der erste Zeitrahmen kann beispielsweise eine Stunde, mehrere Stunden, wie 3 Stunden, 5 Stunden, 6 Stunden, 10 Stunden, 12 Stunden, 18 Stunden, 24 Stunden (ein Tag), mehrere Tage, eine Woche sein. Die Anzahl der Wechsel können beispielsweise ab 2, 3, 4, ..., 10, .... 20 Wechsel sein.

Dies hat den besonderen Vorteil, dass bei einem häufigen temperaturbedingten Wechsel zum hochohmigen Zustand (vom niederohmigen in den hochohmige Zustand) eine weitere Sicherheit implementiert wird und die Kontakte geöffnet werden, um eine galvanische Trennung durchzuführen und einen erwärmenden Stromfluss komplett zu vermeiden. So wird ein weiteres Wechseln zum hochohmigen Zustand (zum hochohmigen und zurück zum niederohmigen Zustand) des (der) elektronischen Schalter(s) vermieden und Sicherheit im Niederspannungsstromkreis hergestellt.

In einer vorteilhaften Ausgestaltung der Erfindung ist eine (mit der Steuerungseinheit verbundene) Kommunikationseinheit vorgesehen. Bei Überschreitung eines vierten Temperaturschwellwertes wird eine Warnung mittels der Kommunikationseinheit abgegeben. Der vierte Temperaturschwellwert ist kleiner als der erste Temperaturschwellwert.

Der vierte Temperaturschwellwert kann beispielsweise 10, ..., 20, ..., 30, ..., 40 Kelvin kleiner als der erste Temperaturschwellwert sein.

Dies hat den besonderen Vorteil, dass bei Erreichen eines Temperaturschwellwertes ein Hinweis kommuniziert wird, so dass beispielsweise bzw. vorteilhafterweise eine Ursachenermittlung durchgeführt werden kann, bevor es zu einer Abschaltung aufgrund einer Übertemperatur kommt.

Alternativ oder zusätzlich kann mittels der Kommunikationseinheit die Höhe der Temperatur (oder ein Äquivalent) des Temperatursensors abgegeben (kommuniziert) werden.

Dies hat den besonderen Vorteil, dass eine (zentrale) Temperaturüberwachung eines bzw. mehrerer Schutzschaltgeräte durchgeführt werden kann, so dass bei steigenden Temperaturen entsprechende Maßnahmen ergriffen werden können.

In einer vorteilhaften Ausgestaltung der Erfindung ist eine mit der Steuerungseinheit verbundene Anzeigeeinheit vorgesehen, die am Schutzschaltgerät sichtbare Anzeigemittel aufweist, zur Anzeige der Überschreitung von Temperaturgrenzwerten (erster oder/und zweiter oder/und dritter oder/und vierter) oder (und) der Höhe der Temperatur. Alternativ oder zusätzlich eines hochohmigen oder niederohmigen Zustandes der elektronischen Schalter.

Dies hat den besonderen Vorteil, dass eine Visualisierung des Temperaturzustandes gegeben ist.

In einer vorteilhaften Ausgestaltung der Erfindung sind die mechanischen Kontakte durch die Steuerungseinheit öffenbar, können aber nicht durch die Steuerungseinheit geschlossen werden.

Dies hat den besonderen Vorteil, dass eine hohe Sicherheit des Schutzschaltgerätes gegeben ist, da schutzschaltgeräteintern die Kontakte nicht fehlerhaft geschlossen werden können.

In einer vorteilhaften Ausgestaltung der Erfindung weisen die mechanischen Kontakte eine Freischaltfunktionalität auf.

Diese kann eine gemäß Normenlage vorgesehene Freischaltfunktionalität sein. Insbesondere derart, dass die Kontakte durch die Steuerungseinheit geöffnet werden können, auch wenn die mechanische Handhabe blockiert ist, d.h. zum Beispiel, wenn die Handhabe für den geschlossenen Kontaktzustand blockiert wird/ist.

Dies hat den besonderen Vorteil, dass eine hohe Sicherheit und ein insbesondere Normengerechtes Schutzschaltgerät für Niederspannungsstromkreise gegeben ist. Der Stromfluss kann jederzeit galvanisch unterbrochen werden, durch Öffnen der Kontakte.

In einer vorteilhaften Weiterführung der Ausgestaltung ist das Schutzschaltgerät derart ausgestaltet, dass bei einem durch die Steuerungseinheit initiierten niederohmig werden, beispielsweise bei Unterschreitung des dritten Temperaturschwellwertes, der elektronische Schalter beim jeweiligen Nulldurchgang der Spannung (bzw. bei einer Spannung, die kleiner als 50V, 25V, insbesondere kleiner 10V ist) niederohmig wird.

Dies hat den besonderen Vorteil, dass die Netzrückwirkungen reduziert werden und die Belastung im Schalter geringer ist.

Erfindungsgemäß wird ein korrespondierendes Verfahren (Verfahrensansprüche) für ein Schutzschaltgerät für einen Mehrphasen-Niederspannungswechselstromkreis mit elektronischen (halbleiterbasierten) Schaltern / Schaltelementen mit den gleichen und weiteren Vorteilen beansprucht.

Das Verfahren für ein Schutzschaltgerät (SG) zum Schutz eines elektrischen Mehrphasen-Niederspannungswechselstromkreises weist auf:

- Serienschaltungen eines mechanischen Phasen-Kontaktes und eines elektronischen Schalters, wobei jeweils eine Serienschaltung einen netzseitigen Phasen-Anschluss mit einen lastseitigen Phasen-Anschluss (elektrisch) verbindet,
- dass die mechanischen Phasen-Kontakte zur Vermeidung eines Stromflusses gemeinsam geöffnet oder für einen Stromfluss gemeinsam geschlossen werden können,
- dass die elektronischen Schalter mittels halbleiterbasierter Schaltelemente in einen hochohmigen Zustand der Schaltelemente zur Vermeidung eines Stromflusses oder einen niederohmigen Zustand der Schaltelemente zum Stromfluss geschaltet werden können,
- dass die elektronischen Schalter unabhängig voneinander in einen hochohmigen oder niederohmigen Zustand geschaltet werden können, um (vorteilhaft) einen phasenleiterabhängigen Stromfluss zu vermeiden oder zu ermöglichen,

- dass für jede Serienschaltung jeweils mindestens ein Temperatursensor vorgesehen ist,
insbesondere zur jeweiligen Ermittlung der Höhe der Temperatur des jeweiligen elektronischen Schalters, insbesondere des halbleiterbasierten Schaltelementes,
- dass bei Überschreitung eines ersten Temperaturschwellwertes eines Temperatursensors einer Serienschaltung der elektronische Schalter der Serienschaltung in einen hochohmigen Zustand zur Vermeidung eines Stromflusses geschaltet wird, um eine Überhitzung (die zu einer Beschädigung oder einer erhöhten Alterung führen würde) (des Schutzschaltgerätes / des elektronischen Schalters / des halbleiterbasierten Schaltelementes) zu vermeiden.

Vorteilhaft werden bei Überschreitung eines ersten Temperaturschwellwertes eines Temperatursensors einer Serienschaltung alle elektronischen Schalter in einen hochohmigen Zustand zur Vermeidung eines Stromflusses geschaltet, um eine Überhitzung zu vermeiden.

Vorteilhaft wird die Höhe des Stromes der jeweiligen Serienschaltung ermittelt und bei Überschreitung mindestens eines Stromschwellwertes in einer Serienschaltung wird eine Vermeidung eines Stromflusses der betreffenden Serienschaltung, insbesondere für eine erste Zeitdauer, durch den betreffenden elektronischen Schalter initiiert.

Vorteilhaft werden bei einem initiierten hochohmigen Zustand eines elektronischen Schalters zur Vermeidung der Überhitzung und bei Überschreitung eines höheren zweiten Temperaturschwellwertes die mechanischen Kontakte geöffnet.

Vorteilhaft wird bei einem hochohmigen Zustand eines elektronischen Schalters zur Vermeidung der Überhitzung und Unterschreitung eines dritten Temperaturschwellwertes der elektronische Schalter in einen niederohmigen Zustand geschaltet. Der dritte Temperaturschwellwert ist kleiner als der erste Temperaturschwellwert.

Vorteilhaft wird bei einem hochohmigen Zustand eines elektronischen Schalters zur Vermeidung der Überhitzung und Ablauf einer ersten Zeitspanne seit Eintreten des hochohmigen Zustandes zur Vermeidung der Überhitzung der elektronische Schalter in den niederohmigen Zustand geschaltet.

Vorteilhaft werden bei einem eine erste Anzahl überschreitenden Wechsel in den hochohmigen Zustand zur Vermeidung der Überhitzung innerhalb eines ersten Zeitrahmens die mechanischen Kontakte geöffnet.

Vorteilhaft wird bei Überschreitung eines vierten Temperaturschwellwertes eine Warnung abgegeben.

Vorteilhaft wird die Höhe der Temperatur mindestens eines Temperatursensors oder ein Äquivalent abgegeben.

Alle Ausgestaltungen, sowohl in abhängiger Form rückbezogen auf den Patentanspruch 1 bzw. 17, als auch rückbezogen lediglich auf einzelne Merkmale oder Merkmalskombinationen von Patentansprüchen, insbesondere auch ein Rückbezug der anhängigen Anordnungsansprüche auf den unabhängigen Verfahrensanspruch, bewirken eine Verbesserung eines Schutzschaltgerätes, insbesondere eine Vermeidung einer Zerstörung, einer Beschädigung oder eines unzulässigen Betriebszustand (insbesondere eine unzulässige Betriebstemperatur) eines Schutzschaltgerätes.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

Figur 1 eine erste Darstellung eines Schutzschaltgerätes,

Figur 2 eine zweite Darstellung eines Schutzschaltgerätes,

Figur 3 eine erste Darstellung eines Diagramms,

Figur 4 eine zweite Darstellung eines Diagramms,

Figur 5 eine dritte Darstellung eines Diagramms,

Figur 6 eine vierte Darstellung eines Diagramms,

Figur 7 eine fünfte Darstellung eines Diagramms.

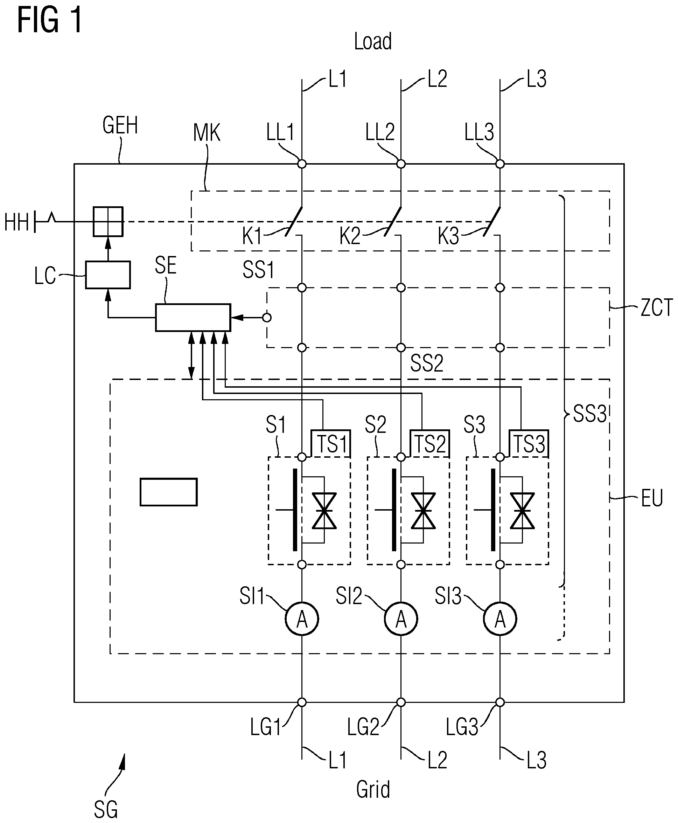

Figur 1 zeigt eine beispielhafte Darstellung eines 3-poligen, z.B. für 3-Phasenleiter, Schutzschaltgerätes SG zum Schutz eines elektrischen Mehrphasen-Niederspannungswechselstromkreises, im Beispiel gemäß Figur 1 eines Dreiphasen-Niederspannungswechselstromkreises, aufweisend:

- ein Gehäuse GEH mit einem ersten, zweiten und dritten netzseitigen Phasen-Anschluss LG1, LG2, LG3 und einem ersten, zweiten und dritten lastseitigen Phasen-Anschluss LL1, LL2, LL3, für einen ersten, zweiten und dritten Phasen-Leiter L1, L2, L3 des Niederspannungswechselstromkreises,

an der Netzseite Grid ist üblicherweise eine Energiequelle angeschlossen,
an der Lastseite Load ist üblicherweise ein Verbraucher angeschlossen.

Im Gehäuse GEH:

- eine erste Serienschaltung SS1 eines ersten mechanischen Phasen-Kontaktes K1 und eines ersten elektronischen Schalters S1,

  eine zweite Serienschaltung SS2 eines zweiten mechanischen Phasen-Kontaktes K2 und eines zweiten elektronischen Schalters S2,
  eine dritte Serienschaltung SS3 eines dritten mechanischen Phasen-Kontaktes K3 und eines dritten elektronischen Schalters S3,

  wobei:

  die erste Serienschaltung SS1 den ersten netzseitigen Phasen-Anschluss LG1 mit dem ersten lastseitigen Phasen-Anschluss LL1,
  die zweite Serienschaltung SS2 den zweiten netzseitigen Phasen-Anschluss LG2 mit dem zweiten lastseitigen Phasen-Anschluss LL2 und
  die dritte Serienschaltung SS3 den dritten netzseitigen Phasen-Anschluss LG3 mit dem dritten lastseitigen Phasen-Anschluss LL3 elektrisch verbindet,

- die mechanischen Phasen-Kontakte K1, K2, K3 sind gemeinsam schaltbar, d.h. werden zur Vermeidung eines Stromflusses gemeinsam geöffnet oder für einen Stromfluss gemeinsam geschlossen, d.h. die mechanischen Kontakte sind über mechanische Kopplung (z.B. Schaltwelle) miteinander verbunden, - die elektronischen Schalter S1, S2, S3 sind mittels halbleiterbasierter Schaltelemente in einen hochohmigen Zustand der Schaltelemente zur Vermeidung eines Stromflusses oder einen niederohmigen Zustand der Schaltelemente zum Stromfluss schaltbar.

Erfindungsgemäß sind der erste, zweite und dritte elektronische Schalter unabhängig voneinander in einen hochohmigen oder niederohmigen Zustand schaltbar. D.h. der erste, zweite und dritte elektronische Schalter werden unabhängig voneinander in einen hochohmigen oder niederohmigen Zustand geschaltet. Insbesondere um einen phasenleiterabhängigen Stromfluss zu vermeiden oder zu ermöglichen.

Gemäß Figur 1 sind eine erste, zweite und dritte Stromsensoreinheit SI1, SI2, SI3 vorgesehen. Die erste Stromsensoreinheit SI1 ist in der ersten Serienschaltung SS1, die zweite Stromsensoreinheit SI2 ist in der zweiten Serienschaltung SS2 und die dritte Stromsensoreinheit SI3 ist in der dritten Serienschaltung SS3 vorgesehen bzw. angeordnet, zur jeweiligen Ermittlung der Höhe des Stromes des ersten, zweiten und dritten Phasen-Leiters L1, L2, L3, insbesondere, dass momentane Stromwerte vorliegen.

Der erste mechanische Phasen-Kontakt K1, der zweite mechanische Phasen-Kontakt K2 und der dritte mechanische Phasen-Kontakt K3 sind gemäß Figur 1 Teil einer mechanischen Trennkontakteinheit MK, die die Phasen-Kontakte K1, K2, K3 gemeinsam öffnet oder schließt. Die mechanische Trennkontakteinheit MK kann eine am Schutzschaltgerät zugängliche Handhabe HH aufweisen, zum manuellen (durch eine Person betätigten) Öffnen oder Schließen der Phasen-Kontakte. Die mechanische Trennkontakteinheit MK entspricht beispielsweise einer klassischen Einheit, wie sie von elektromechanischen Schutzschaltgeräten (Leitungsschutzschaltern, Leistungsschaltern) bekannt ist (allerdings erfindungsgemäß ohne Elemente zur Überstrom- oder Kurzschlusserkennung, wie Bimetallauslöser etc.)

Das Schutzschaltgerät ist insbesondere derart ausgestaltet, dass die mechanische Trennkontakteinheit MK durch eine Steuerungseinheit SE geöffnet, aber nicht geschlossen werden kann. Insbesondere ist ein Schließen der mechanischen Trennkontakteinheit MK durch die Handhabe HH erst nach einer Freigabe durch die Steuerungseinheit SE möglich ist. Hierfür kann eine Freigabeeinheit LC vorgesehen sein. D.h. durch die Handhabe HH können erst bei Vorliegen der Freigabe bzw. eines Freigabesignals (von der Steuerungseinheit) die Kontakte geschlossen werden. Ohne die Freigabe bzw. das Freigabesignal kann die Handhabe HH zwar betätigt, die Kontakte aber nicht geschlossen werden ("Dauerrutscher").

Die Freigabeeinheit LC kann ferner derart ausgestaltet sein, dass ein Öffnen der Kontakte K1, K2, K3 der mechanischen Trennkontakteinheit MK durch ein Steuersignal der Steuerungseinheit SE möglich ist, wie in Figur 1 durch einen Pfeil von der Steuerungseinheit SE zu Freigabeeinheit LC angedeutet.

Gemäß Figur 1 sind die mechanischen Phasen-Kontakte K1, K2, K3 den lastseitigen Phasen-Anschlüssen / der Lastseite Load und die elektronischen Schalter S1, S2, S3 den netzseitigen Phasen-Anschlüssen / Netzseite Grid zugeordnet.

Der erste elektronische Schalter S1, der zweite elektronische Schalter S2 und der dritte elektronische Schalter

**EP 4 503 360 A1**

S3 können Teil einer elektronischen Unterbrechungseinheit EU sein, wobei die elektronischen Schalter S1, S2, S3 unabhängig voneinander schaltbar sind.

Die elektronische Unterbrechungseinheit / die elektronischen Schalter können eine bidirektionale Spannungsfestigkeit aufweisen. Speziell ist ein Überspannungsschutz für die halbleiterbasierten Schaltelemente vorgesehen, um die Spannungen zu begrenzen und somit einen Schutz für die halbleiterbasierten Schaltelemente zu haben.

Es ist eine Steuerungseinheit SE vorgesehen (wie schon teilweise erwähnt), die mit den Stromsensoreinheiten SI1, SI2, SI3, den mechanischen Phasen-Kontakten (K1, K2, K3) bzw. der mechanischen Trennkontakteinheit MK (wie in Figur 1 eingezeichnet) und den elektronischen Schaltern S1, S2, S3 verbunden ist.

Die Stromsensoreinheiten SI1, SI2, SI3 ermitteln jeweils die Höhe des Stromes ihres jeweiligen Leiters, so dass insbesondere Momentanwerte des Stromes vorliegen.

Bei Überschreitung mindestens eines ersten Stromschwellwertes in einem Leiter wird eine Vermeidung des Stromflusses des betreffenden Leiters durch hochohmig werden des elektronischen Schalters initiiert.

Das hochohmig sein kann insbesondere für eine erste Zeitdauer erfolgen. Nach der Zeitdauer kann der betreffende elektronische Schalter wieder niederohmig werden.

Das niederohmig werden kann insbesondere im nächsten Nulldurchgang bzw. vor oder nach dem Nulldurchgang der Spannung erfolgen. (Alle 3 Optionen: im Nulldurchgang, vor dem Nulldurchgang oder nach dem Nulldurchgang - sind möglich, bzw. bei betragsmäßiger Unterschreitung einer Spannungsschwelle, insbesondere 50V, 25V oder 10V).

Die erste Zeitspanne kann insbesondere kleiner als 20 ms, speziell kleiner als 10 ms sein.

Es kann eine Differenzstromsensoreinheit ZCT vorgesehen sein, wie in Figur 1 eingezeichnet, zur Erfassung von Differenzströmen des Niederspannungswechselstromkreises, wie sie z.B. aus Fehlerstromschutzschaltern bekannt ist. Die Differenzstromsensoreinheit ZCT ist mit der Steuerungseinheit SE verbunden.

Die Stromsensoreinheiten SI1, SI2, SI3 sind im Beispiel gemäß Figur 1 zwischen netzseitigen Anschlüssen LG1, LG2, LG3 der Serienschaltung des elektronischen Schalters S1, S2, S3 und dem mechanischen Phasen-Kontakt K1, K2, K3 angeordnet. Konkret zwischen netzseitigen Anschlüssen LG1, LG2, LG3 und den elektronischen Schaltern S1, S2, S3. Die Stromsensoreinheiten SI1, SI2, SI3 können auch anderweitig angeordnet sein. Z.B. zwischen elektronischen Schalter S1, S2, S3 und mechanischen Phasen-Kontakt K1, K2, K3.

Erfindungsgemäß ist für jede Serienschaltung SS1, SS2, SS3 jeweils mindestens ein Temperatursensor TS1, TS2, TS3 vorgesehen.

Bei der ersten Serienschaltung SS1 ist der erste Temperatursensor TS1,

bei der zweiten Serienschaltung SS2 ist der zweite Temperatursensor TS2,
bei der dritten Serienschaltung SS3 ist der dritte Temperatursensor TS3 vorgesehen. D.h. jede Serienschaltung weist jeweils mindestens einen Temperatursensor auf.

Im Beispiel gemäß Figur 1 ist der Temperatursensor jeweils beim (z.B. am) elektronischen Schalter vorgesehen, insbesondere an dessen halbleiterbasierten Schaltelement(en).

Der erste, zweite und dritte Temperatursensor TS1, TS2, TS3 sind jeweils mit der Steuerungseinheit SE verbunden.

Die Temperatursensoren TS1, TS2, TS3 dienen insbesondere zur jeweiligen Ermittlung der Höhe der Temperatur des jeweiligen elektronischen Schalters, insbesondere des halbleiterbasierten Schaltelementes.

D.h. der erste Temperatursensor TS1 ermittelt z.B. die Höhe der Temperatur des ersten elektronischen Schalters S1, insbesondere des halbleiterbasierten Schaltelementes / der halbleiterbasierten Schaltelemente.

Der zweite Temperatursensor TS2 ermittelt z.B. die Höhe der Temperatur des zweiten elektronischen Schalters S2, insbesondere des halbleiterbasierten Schaltelementes / der halbleiterbasierten Schaltelemente.

Der dritte Temperatursensor TS3 ermittelt z.B. die Höhe der Temperatur des dritten elektronischen Schalters S3, insbesondere des halbleiterbasierten Schaltelementes / der halbleiterbasierten Schaltelemente.

Das Schutzschaltgerät ist derart ausgestaltet, dass bei Überschreitung eines ersten Temperaturschwellwertes 1.SW eines Temperatursensors einer Serienschaltung der elektronische Schalter der Serienschaltung in einen hochohmigen Zustand zur Vermeidung eines Stromflusses geschaltet wird, um eine Überhitzung zu vermeiden.

Alternativ oder zusätzlich (beispielsweise konfigurierbar) können bei Überschreitung eines ersten Temperaturschwellwertes eines Temperatursensors einer Serienschaltung alle elektronischen Schalter in einen hochohmigen Zustand zur Vermeidung eines Stromflusses geschaltet werden, um eine Überhitzung zu vermeiden.

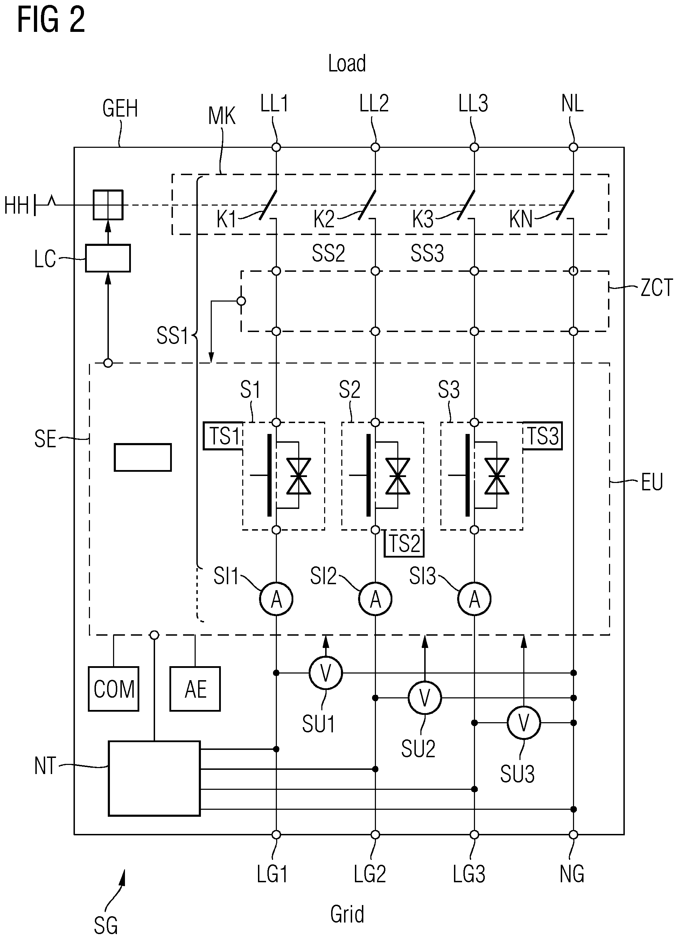

Figur 2 zeigt eine Darstellung gemäß Figur 1, mit den nachfolgenden Unterschieden.

Es ist ein netzseitiger Neutralleiter-Anschluss NG und ein lastseitiger Neutralleiter-Anschluss NL vorgesehen, für einen Neutralleiter N des Mehrphasen-Niederspannungswechselstromkreises, im Beispiel gemäß Figur 2 ein Dreiphasen-Niederspannungswechselstromkreises mit Neutralleiter. Gemäß Figur 2 ist der netzseitige Neutralleiter-Anschluss NG über einen Neutralleiter-Kontakt KN mit dem lastseitigen Neutralleiter-Anschluss NL verbunden.

Alternativ kann der netzseitige Neutralleiter-Anschluss NG auch direkt (d.h. ohne schaltbaren Kontakt) mit dem lastseitigen Neutralleiter-Anschluss NL verbunden sein.

Ein elektronischer Schalter ist in diesem Beispiel im Neutralleiter-Pfad im Gehäuse des Schutzschaltgerätes nicht vorgesehen. D.h. Die Neutralleiterverbindung zwischen netzseitigen Neutralleiter-Anschluss NG und lastseitigen Neutralleiter-Anschluss NL ist frei von elektronischen Schaltern (Elektronikschalterfrei).

Vorteilhaft kann der mechanische Neutralleiter-Kontakt KN gemeinsam mit den Phasen-Kontakten K1, K2, K3 geschaltet werden. D.h. der mechanische Neutralleiter-Kontakt KN ist gemeinsam mit den Phasen-Kontakten K1, K2, K3 öffenbar oder schließbar, wie weiter obenstehend zu den Kontakten K1, K2, K3 ausgeführt.

Speziell kann die mechanische Trennkontakteinheit MK derart ausgestaltet sein, dass vor dem Schließen der Phasen-Kontakte K1, K2, K3 der Neutralleiter-Kontakt KN geschlossen wird. Analog kann nach dem Öffnen der Phasen-Kontakte K1, K2, K3 der Neutralleiter-Kontakt KN geöffnet werden.

Weiterhin ist eine Energieversorgung NT vorgesehen, wie beispielsweise ein Netzteil vorgesehen, zur Energieversorgung des Schutzschaltgerätes SG, insbesondere der Steuerungseinheit SE.

Die Energieversorgung NT ist im Beispiel einerseits mit den Phasenleitern L1, L2, L3 sowie (ggfs.) dem Neutralleiter N verbunden. Sie kann auch nur mit einem Teil der Leiter (mindestens zwei) zur Energieversorgung verbunden sein. Die Energieversorgung NT ist im Beispiel andererseits mit der Steuerungseinheit SE verbunden.

Zum anderen ist die Steuerungseinheit SE zusammengefasst mit den elektronischen Schaltern S1, S2, S3, den Temperatursensoren TS1, TS2, TS3 und den Stromsensoreinheiten SI1, SI2, SI3 dargestellt.

Weiterhin ist zwischen jedem Phasenleiter und dem Neutralleiter jeweils eine Spannungssensoreinheit vorgesehen ist. Zwischen ersten Phasenleiter L1 und Neutralleiter N ist eine erste Spannungssensoreinheit SU1, zwischen zweiten Phasenleiter L2 und Neutralleiter N ist eine zweite Spannungssensoreinheit SU2 und zwischen dritten Phasenleiter L3 und Neutralleiter N ist eine dritte Spannungssensoreinheit SU3 vorgesehen, zur Ermittlung der Höhe der Spannung zwischen dem jeweiligen Phasen- und Neutralleiter, insbesondere das momentane Spannungswerte vorliegen. Die Spannungssensoreinheiten SU1, SU2, SU3 sind mit der Steuerungseinheit SE verbunden.

Bei einem durch die Steuerungseinheit SE initiierten niederohmig werden der elektronischen Schalter S1, S2, S3, beispielsweise:

- bei einem benutzerseitig initiierten niederohmig werden oder
- bei einem durch das Schutzschaltgerät initiierten niederohmig werden, speziell bei unterschreiten eines dritten Temperarturschwellwertes 3.SW

=> kann der betroffene elektronische Schalter beim (im Bereich, s.o.) jeweiligen Nulldurchgang der Spannung niederohmig werden.

Die Spannungssensoreinheiten SU1, SU2, SU3 sind hierzu, wie bereits genannt, mit der Steuerungseinheit SE verbunden, die ferner mit den Stromsensoreinheiten SI1, SI2, SI3, den Temperatursensoren TS1, TS2, TS3, den mechanischen Phasen-Kontakten K1, K2, K3 (bzw. mechanische Trennkontakteinheit MK) und den elektronischen Schaltern (S1, S2, S3) verbunden ist. Das Schutzschaltgerät kann ferner vorteilhaft derart ausgestaltet sein, dass bei Überschreitung mindestens eines ersten Stromschwellwertes (speziell Momentanwert des Stromes) in einem Leiter eine Vermeidung eines Stromflusses des betreffenden Leiters durch den betreffenden elektronischen Schalter initiiert wird. Beim nächsten oder übernächsten Nulldurchgang der Spannung wird der elektronische Schalter wieder niederohmig, um einen Stromfluss zu ermöglichen.

Dies kann für mehrere Male erfolgen, bis eine erste Anzahl an Wiederholungen überschritten ist. Dann können:

a) alle elektronischen Schalter hochohmig werden, oder (/und)
b) die Kontakte geöffnet werden (galvanische Trennung).

Beliebige Kombinationen (Zwischenkombinationen) aus den Darstellungen der beispielhaften Schutzschaltgeräte gemäß Figur 1 und 2 sind möglich (z.B. Energieversorgung NT aus Figur 2 in Figur 1, etc.).

Mit hochohmig ist ein Zustand gemeint, bei dem nur noch ein Strom vernachlässigbarer Größe fließt. Insbesondere sind mit hochohmig Widerstandswerte von größer als 1 Kiloohm, besser größer als 10 Kiloohm, 100 Kiloohm, 1 Megaohm, 10 Megaohm, 100 Megaohm, 1 Gigaohm oder größer gemeint.

Mit niederohmig ist ein Zustand gemeint, bei dem der auf dem Schutzschaltgerät angegebene Stromwert fließen könnte. Insbesondere sind mit niederohmig Widerstandswerte gemeint, die kleiner als 10 Ohm, besser kleiner als 1 Ohm, 100 Milliohm, 10 Milliohm, 1 Milliohm oder kleiner sind.

Die elektronischen Schalter S1, S2, S3, bzw. die elektronische Unterbrechungseinheit EU kann Halbleiterbauelemente wie Bipolartransistoren, Feldeffekttransistoren (FET), Isolated Gate Bipolartransistoren (IGBT), Metall Oxid Schicht Feldeffekttransistoren (MOSFET) oder andere (selbstgeführte) Leistungshalbleiter aufweisen. Insbesondere IGBT's und MOSFET's eignen sich auf Grund geringer Durchflusswiderstände, hoher Sperrschichtwiderstände und eines guten Schaltverhaltens besonderes gut für die elektronischen Schalter (als halbleiterbasierte Schaltelemente).

Mit mechanischen Kontakten bzw. mechanischer Trennkontakteinheit MK ist insbesondere eine (normgerechte) Trennfunktion gemeint, realisiert durch die Trennkontakteinheit MK. Mit Trennfunktion sind die Punkte:

- Mindestluftstrecke nach Norm (Mindestabstand der Kontakte),
- Kontaktstellungsanzeige der Kontakte der mechanischen Trennkontakteinheit,
- Betätigung / Unterbrechung der Kontakte der mechanischen Trennkontakteinheit (durch die Steuerungseinheit) immer möglich (keine (dauerhafte) Blockierung der Kontakte in den geschlossenen Zustand durch die Handhabe möglich),
gemeint.

Hinsichtlich der Mindestluftstrecke zwischen den Kontakten der Trennkontakteinheit ist diese im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist die Trennkontakteinheit bzw. Schutzschaltgerät eine Trennfunktion (Trennereigenschaft) auf.

Im Sinne der Erfindung sind hierbei für die Trennerfunktion und deren Eigenschaften der Normenreihe DIN EN 60947 bzw. IEC 60947 einschlägig, auf die hier durch Referenz Bezug genommen wird.

Die Trennkontakteinheit ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Vorteilhafterweise kann die Mindestluftstrecke die folgenden Werte aufweisen:

**Tabelle 13 - Mindestluftstrecken**

| Bemessungsstoßspannungsfestigkeit | Mindestluftstrecken mm | | | | | | | |
|---|---|---|---|---|---|---|---|---|
| *U*imp | Fall A inhomogenes Feld (siehe 3.7.63) | | | | Fall B homogenes Feld, ideale Bedingungen (siehe 3.7.62) | | | |
| | Verschmutzungsgrad | | | | Verschmutzungsgrad | | | |
| kV | 1 | 2 | 3 | 4 | 1 | 2 | 3 | 4 |
| 0,33 | 0,01 | | | | 0,01 | | | |
| 0,5 | 0,04 | 0,2 | | | 0,04 | 0,2 | | |
| 0,8 | 0,1 | | 0,8 | 1,6 | 0,1 | | 0,8 | 1,6 |
| 1,5 | 0,5 | 0,5 | | | 0,3 | 0,3 | | |
| 2,5 | 1,5 | 1,5 | 1,5 | | 0,6 | 0,6 | | |
| 4,0 | 3. | 3 | 3 | 3 | 1,2 | 1,2 | 1,2 | |
| 6,0 | 5,5 | 5,5 | 5,5 | 5,5 | 2 | 2 | 2 | 2 |
| 8,0 | 8 | 8 | 6 | 8 | 3 | 3 | 3 | 3 |
| 12 | 14 | 14 | 14 | 14 | 4,5 | 4,5 | 4,5 | 4,5 |
| ANMERKUNG Die angegebenen kleinsten Luftstrecken beruhen auf der 1,2/50-μs-Stoßspannung bei einem Luftdruck von 80 kPa, was dem Luftdruck bei 2 000 m über Nhf entspricht. | | | | | | | | |

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

Mit mechanischer Trennkontakteinheit ist insbesondere kein Relaiskontakt gemeint.

Die Steuerungseinheit SE kann einen Mikrocontroller (Mikrocontrollerunit) aufweisen.

Das Schutzschaltgerät kann eine (insbesondere leitungslose / drahtlose) Kommunikationseinheit COM aufweisen, die mit der Steuerungseinheit SE verbunden ist bzw. ein Teil dieser ist. Bei Überschreitung eines vierten Temperaturschwellwertes kann eine Warnung mittels der Kommunikationseinheit COM abgegeben werden. Alternativ oder zusätzlich kann mittels der Kommunikationseinheit COM die Höhe der Temperatur mindestens eines Temperatursensors, eines Teils der Temperatursensoren oder aller Temperatursensoren abgegeben (kommuniziert) werden (bzw. ein Äquivalent dessen).

Weiterhin kann eine Anzeigeeinheit AE vorgesehen sein. Die Anzeigeeinheit AE kann als kombinierte Anzeige- und Eingabeeinheit ausgestaltet sein. Die Anzeigeeinheit AE (Anzeige- und Eingabeeinheit) ist mit der Steuerungseinheit SE verbunden bzw. ein Teil dieser. Die Anzeigeeinheit weist am Schutzschaltgerät sichtbare Anzeigemittel auf, insbesondere zur Anzeige des hochohmigen oder niederohmigen Zustandes der elektronischen Schalter. Alternativ bzw. zusätzlich zur Anzeige der Überschreitung von Temperaturgrenzwerten (erster oder/und zweiter oder/und dritter oder/und vierter) oder (und) der Höhe der Temperatur mindestens eines Temperatursensors, eines Teils der Temperatursensoren oder aller Temperatursensoren.

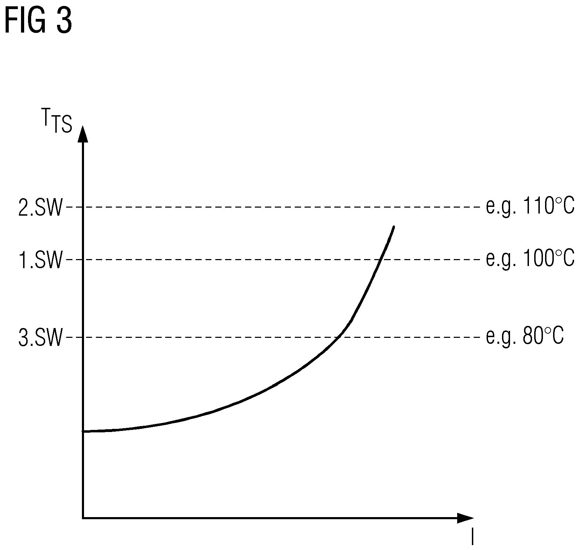

Figur 3 zeigt eine Darstellung eines ersten Diagramms bzw. Koordinatensystems, bei dem auf der horizontalen Achse (Abszisse) die Höhe des Stromes I (z.B. als Effektivwert eines Wechselstromes) des Niederspannungsstromkreises aufgetragen und auf der vertikalen Achse (Ordinate) die Höhe der Temperatur $T_{TS}$ eines Temperatursensors (z.B. TS1, TS2 oder TS3) aufgetragen ist (die sich am Temperatursensor nach einer Zeit, z.B. im thermisch eingeschwungenen Zustand, einstellt).

Es wird der Verlauf der Temperatur $T_{TS}$ des Temperatursensors in Abhängigkeit von der Höhe des Stromes I des Phasenleiters des Niederspannungsstromkreises dargestellt.

Dabei wird angenommen, dass die Erwärmung im Schutzschaltgerät, spezieller im elektronischen Schalter, spezieller dessen halbleiterbasierter Schaltelemente, abhängig ist von der Höhe des Stromes I des jeweiligen (betreffenden) Phasenleiters des Niederspannungsstromkreises durch das Schutzschaltgerätes (das Schutzschaltgerät soll den Niederspannungsstromkreis schützen). Mit steigender Höhe des Stromes I im Phasenleiter steigt die Temperatur des Temperatursensors des betreffenden elektronischen Schalters und in Folge dessen des Schutzschaltgerätes, spezieller deren halbleiterbasierten Schaltelemente. Somit steigt die durch den Temperatursensor ermittelte Temperatur $T_{TS}$. Die Temperatur nimmt monoton steigend mit der Höhe des Stromes zu. (Neben der Höhe des Stromes hat auch die Umgebungstemperatur einen Einfluss auf die Erwärmung im Schutzschaltgerät. Zur einfacheren Darstellung ist dies in der Figur 3 nicht dargestellt.)

Gemäß Figur 3 sind verschiedene Temperaturaschwellwerte eingezeichnet. Ein erster Temperaturschwellwert 1.SW, im Beispiel 100 °C, ein zweiter Temperaturschwellwertes 2.SW, im Beispiel 110 °C, ein dritter Temperaturschwellwertes 3.SW, im Beispiel 80 °C.

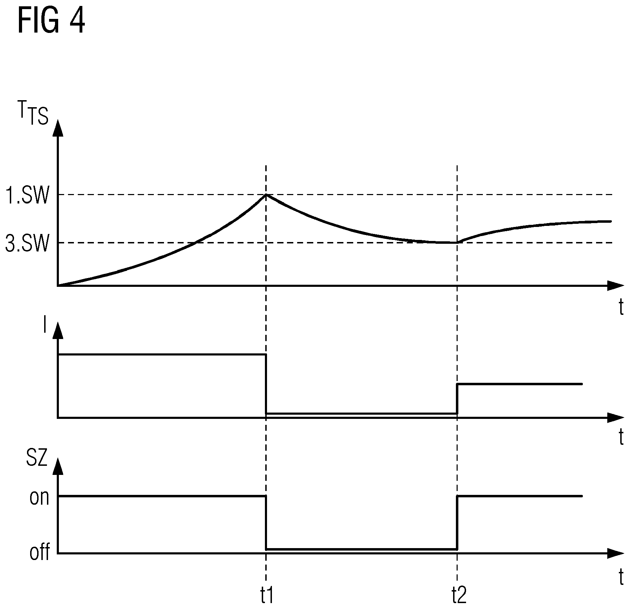

Figur 4 zeigt eine Darstellung gemäß Figur 3, mit dem Unterschied, dass drei, miteinander korrelierte Diagramme dargestellt sind, wobei auf der horizontalen Achse (Abszisse) die Zeit t aufgetragen ist.

Im oberen Bereich von Figur 4 ist die Höhe der Temperatur $T_{TS}$ des Temperatursensors TS in Abhängigkeit von der Zeit t aufgetragen. Der erste Temperaturschwellwert 1.SW und der dritte Temperaturschwellwertes 3.SW sind eingezeichnet.

Im mittleren Bereich von Figur 4 ist die Höhe des Stromes I in Abhängigkeit von der Zeit t aufgetragen.

Im unteren Bereich von Figur 4 ist der Schaltzustand SZ des betreffenden elektronischen Schalters in Abhängigkeit von der Zeit t aufgetragen. Ein niederohmiger Zustand des elektronischen Schalters ist mit on gekennzeichnet. Ein hochohmiger Zustand des elektronischen Schalters ist mit off gekennzeichnet.

Es fließt beispielsweise ein (konstanter) Strom I bzw. ein Strom I mit einem konstanten Effektivwert einer ersten Höhe für eine gewisse Zeit (Figur 4 mitte). Es tritt eine entsprechende Erwärmung im Schutzschaltgerät SG auf. Die Temperatur im Schutzschaltgerät / die ermittelte Höhe der Temperatur $T_{TS}$ des Temperatursensors steigt, bis zum ersten Zeitpunkt t1 der erste Temperaturschwellwert 1.SW erreicht ist (Figur 4 oben). Bei Erreichen bzw. Überschreitung des ersten Temperaturschwellwertes 1.SW, im Beispiel 100 °C, wird der betreffende elektronische Schalter in einen hochohmigen Zustand off (der Schaltelemente) zur Vermeidung eines Stromflusses geschaltet, erster Zeitpunkt t1 (Figur 4 unten). So wird eine weitere Erwärmung und Überhitzung (und damit verbundene Beschädigung) des elektronischen Schalters bzw. Schutzschaltgerätes vermieden.

Das Schutzschaltgerät kann abkühlen. Zu einem zweiten Zeitpunkt t2 wird der dritte Temperaturschwellwert 3.SW, im Beispiel 80 °C, erreicht bzw. unterschritten. Bei Erreichen bzw. Unterschreitung des dritten Temperaturschwellwertes 3.SW wird der elektronische Schalter (wieder) (zum zweiten Zeitpunkt t2) in einen niederohmigen Zustand on (für einen Stromfluss im Niederspannungsstromkreis) geschaltet (Figur 4 unten). Der Strom I kann (ab dem zweiten Zeitpunkt t2) wieder fließen (Figur 4 mitte). Ggfs kann die Temperatur wieder steigen (Figur 4 oben).

Der dritte Temperaturschwellwert ist kleiner als der erste Temperaturschwellwert.

Alternativ oder zusätzlich kann an Stelle des dritten Temperaturschwellwertes 3.SW der Ablauf einer ersten Zeitspanne seit Eintreten des hochohmigen Zustandes der Schaltelemente abgewartet werden. Nach Ablauf einer ersten Zeitspanne seit Eintreten des hochohmigen Zustandes des elektronischen Schalters wird der elektronische Schalter in den niederohmigen Zustand geschaltet (nicht dargestellt).

Erfolgt der Wechsel zwischen hochohmigen Zustand zur Vermeidung der Überhitzung und zurück in den niederohmigen Zustand zu häufig, werden die mechanischen Kontakte (ggfs. der mechanischen Trennkontakteinheit MK) geöffnet. D.h. dass bei einem eine erste Anzahl überschreitenden Wechseln (Toggeln) zwischen hochohmigen Zustand zur Vermeidung der Überhitzung und zurück in den niederohmigen Zustand innerhalb eines ersten Zeitrahmens werden die Kontakte geöffnet.

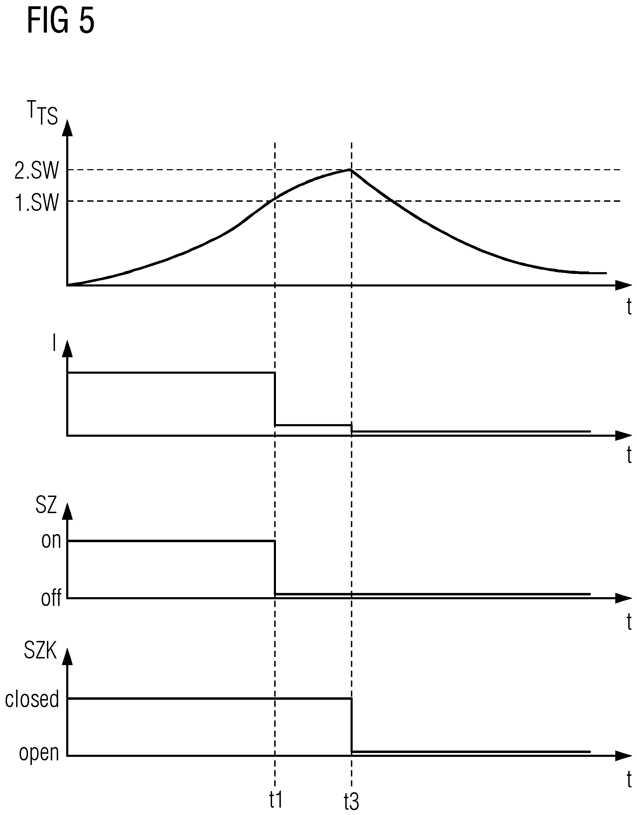

Figur 5 zeigt eine Darstellung gemäß Figur 4, mit dem Unterschied, dass ein viertes Diagramm dargestellt ist, dass mit den drei oberen Diagrammen korreliert ist.

Das vierte Diagramm zeigt im untersten Bereich von Figur 5 den Schaltzustand der mechanischen Kontakte SZK in Abhängigkeit von der Zeit t. Ein geschlossener Zustand der Kontakte ist mit closed gekennzeichnet. Ein offener Zustand der Kontakte ist mit open gekennzeichnet.

Ferner ist oberen Bereich von Figur 5 der erste Temperaturschwellwert 1.SW und der zweite Temperaturschwellwertes 2.SW eingezeichnet.

Es fließt beispielsweise ein (konstanter) Strom I einer ersten Höhe für eine gewisse Zeit (Figur 5 mitte). Es tritt eine entsprechende Erwärmung im elektronischen Schalter auf. Die Temperatur / die ermittelte Höhe der Temperatur $T_{TS}$ des Temperatursensors steigt, bis zum ersten Zeitpunkt t1 der erste Temperaturschwellwert 1.SW erreicht ist (Figur 5 oben).

Bei Erreichen bzw. Überschreitung des ersten Temperaturschwellwertes 1.SW, im Beispiel 100 °C, wird der elektronische Schalter in einen hochohmigen Zustand off (der Schaltelemente) zur Vermeidung eines Stromflusses geschaltet, erster Zeitpunkt t1 (Figur 5 unten).

Der Strom wird reduziert (Figur 5 mitte).

Steigt nun trotz hochohmig geschaltetem elektronischen Schalter die Temperatur weiter an, beispielsweise weil der elektronische Schalter defekt ist (d.h. der hochohmige Zustand ist initiiert, aber beispielsweise nicht oder nicht vollständig wirksam) und ein (geringerer) Strom fließt, so werden bei Erreichen bzw. Überschreitung des zweiten Temperaturschwellwertes 2.SW, im Beispiel 110 °C, die Kontakte geöffnet (Figur 5 unterst), dritter Zeitpunkt t3.

Der zweite Temperaturschwellwertes 2.SW ist höher als der erste Temperaturschwellwertes 1.SW.

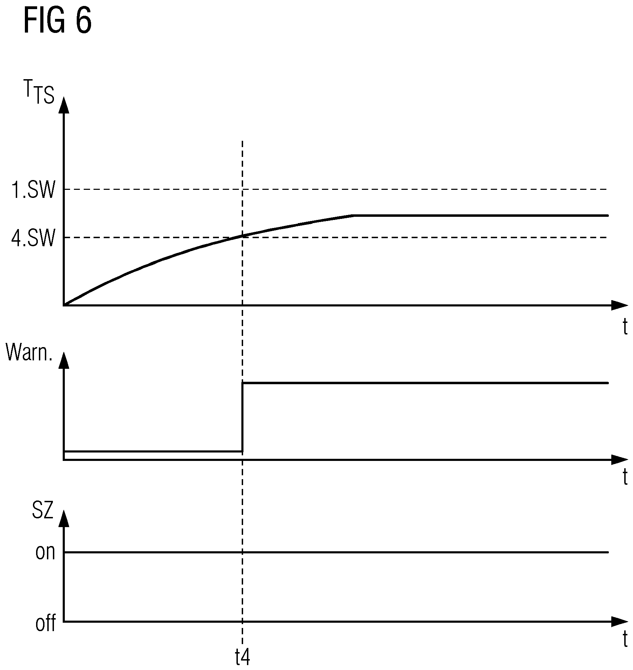

Figur 6 zeigt eine Darstellung gemäß Figur 4, mit dem Unterschied, dass im mittleren Bereich von Figur 6 die Abgabe einer Warnung Warn. in Abhängigkeit von der Zeit t dargestellt ist.

Ferner ist oberen Bereich von Figur 6 der erste Temperaturschwellwert 1.SW und der vierte Temperaturschwellwertes 4.SW dargestellt. Bei Überschreitung des vierten Temperaturschwellwertes zum vierten Zeitpunkt t4 wird eine Warnung Warn. (leitungslos / leitungsgebunden) mittels der Kommunikationseinheit COM abgegeben. Beispielsweise zu einem übergeordnetem Managementsystem. Alternativ oder zusätzlich kann diese angezeigt werden, beispielsweise mit der Anzeigeeinheit AE. Der vierte Temperaturschwellwert ist kleiner als der erste Temperaturschwellwert.

Der elektronische Schalter bleibt im niederohmigen Zustand on.

Alternativ oder zusätzlich kann die Höhe der Temperatur (leitungslos / leitungsgebunden) mittels der Kommunikationseinheit COM abgegeben werden. Beispielsweise zu einem übergeordnetem Managementsystem. Alternativ oder zusätzlich kann die Höhe der Temperatur angezeigt werden, beispielsweise mit der Anzeigeeinheit AE.

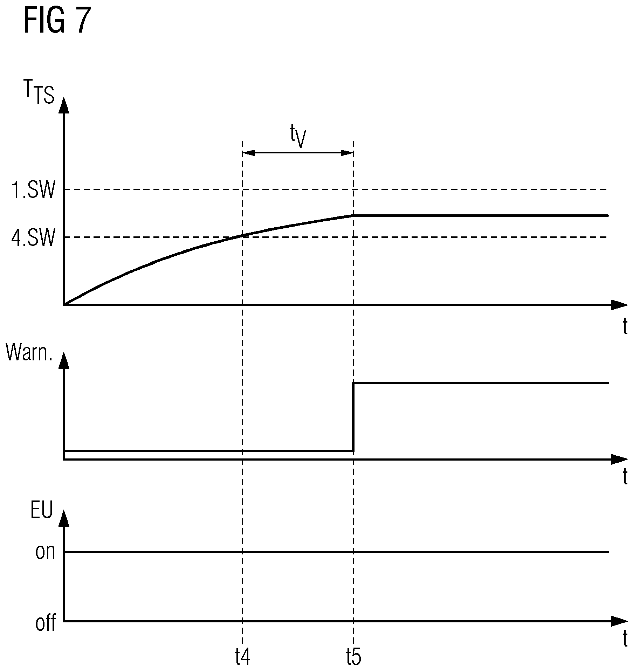

Figur 7 zeigt eine Darstellung gemäß Figur 6, mit dem Unterschied, dass die Warnung Warn. mit einem zeitlichen Versatz (zeitlichen Verzug) $t_V$ abgegeben wird. D.h. bei Überschreitung des vierten Temperaturschwellwertes 4.SW zum vierten Zeitpunkt t4 wird keine Warnung Warn. abgegeben, sondern die Warnung Warn. wird erst zu einem fünften Zeitpunkt t5 abgegeben, wie in Figur 7 eingezeichnet. So können beispielsweise Warnungen vermieden werden, die auf kurzzeitigen Erwärmungen auf Grund von kurzzeitig erhöhten Anlauf- oder Schaltströmen beruhen. Ist vor dem Erreichen des fünften Zeitpunktes t5 die Temperatur $T_{TS}$ wieder unterhalb des vierten

Temperaturschwellwertes 4.SW gesunken, wird keine Warnung Warn. abgegeben.

Der zeitliche Versatz (zeitlichen Verzug) $t_V$ liegt im Bereich ab einer Sekunde, ..., 5 Sekunden, ... 10 Sekunden, ... 1 Minute.

Vorteilhaft kann für jeden Phasenleiter eine individuelle Überwachung der Temperatur des jeweiligen elektronischen Schalters erfolgen und individuell der Strom des Phasenleiters reduziert werden. Nur bei anhaltender Erwärmung, die auf einen Fehler des elektronischen Schalters schließen lässt, wird der Stromkreise (mechanisch / galvanisch) unterbrochen.

Im Folgenden wird die Erfindung mit anderen Worten nochmals erläutert.

In einer elektrischen (Unter-)Verteilungen befinden sich eine Vielzahl von verschiedenen Schutz- und Schaltgeräte, die über entsprechende Leitungen miteinander verbunden werden. Bei der Auslegung einer solchen Unterverteilung müssen auch thermische Betrachtungen und Berechnungen durchgeführt werden, da aufgrund von ohmschen Verlusten auf den Leitungen und den elektrischen Betriebsmitteln Verluste in der Unterverteilung entstehen. Die Unterverteilung wird hierdurch erwärmt. Einer thermischen Überlastung wird heute durch eine entsprechende (Über-)Dimensionierung (nach Norm, Richtlinien oder Vorschriften) verhindert. Neuartige elektronische Schutz- und Schaltgeräte verwenden im Hauptstrompfad elektronische Schaltelemente (Leistungshalbleiter), die ebenfalls erhöhte ohmsche Verluste in der Unterverteilung verursachen. Hierdurch wird das Problem der thermischen Auslegung einer Unterverteilung verschärft.

Der vorhandene Laststrom (durch das Gerät) beeinflusst maßgeblich die Temperatur des Schutzschaltgerätes und damit auch die Temperaturerhöhung. Wird eine kritische Temperatur erreicht, wird ein hochohmiger Zustand initiiert.

So kann kein Strom mehr auf dem betroffenen Leiter (durch das Schutzschaltgerät) fließen und das Gerät (und die Unterverteilung) abkühlen.

Des Weiteren kann eine entsprechende Meldung zur Warnung abgegeben werden.

Da kein Strom auf dem betroffenen Leiter fließt, kühlt der elektronische Schalter / das Schutzschaltgerät wieder ab. Nachdem eine gewisse Temperatur unterschritten wurde, kann der elektronische Schalter automatisch wieder in den niederohmigen Zustand für einen Stromfluss wechseln (Hysterese). Je nach Geräte-Konfiguration kann auch anstelle des niederohmigen Zustandes eine Öffnung der Kontakte (der mechanischen Trennkontakteinheit) initiiert werden. Ein automatisches Wiedereinschalten nach einer Abkühlung ist dann nicht möglich. Ein Manuelles wieder Schließen der Kontakte ist nötig.

Die vorliegende Erfindung beschreibt eine Lösung, die die thermische Auslegung vereinfacht, eine Überdimensionierung vermeidet und einen gefährlichen Zustand in der Unterverteilung aufgrund von Überhitzung verhindert.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Schutzschaltgerät (SG) zum Schutz eines elektrischen Mehrphasen-Niederspannungswechselstromkreises aufweisend:

   - ein Gehäuse (GEH), mit netzseitigen Phasen-Anschlüssen (LG1, LG2, LG3) und lastseitigen Phasen-Anschlüssen (LL1, LL2, LL3) für Phasen-Leiter (L1, L2, L3) des Niederspannungswechselstromkreises,
   - Serienschaltungen (SS1, SS2, SS3) eines mechanischen Phasen-Kontaktes (K1, K2, K3) und eines elektronischen Schalters (S1, S2, S3),
   wobei jeweils eine Serienschaltung (SS1, SS2, SS3) einen der netzseitigen Phasen-Anschlüsse (LG1, LG2, LG3) mit einen der lastseitigen Phasen-Anschlüsse (LL1, LL2, LL3) elektrisch verbindet,
   - dass die mechanischen Phasen-Kontakte (K1, K2, K3) zur Vermeidung eines Stromflusses gemeinsam zum Öffnen oder für einen Stromfluss gemeinsam zum Schließen schaltbar sind,
   - dass die elektronischen Schalter (S1, S2, S3) mittels halbleiterbasierter Schaltelemente in einen hochohmigen Zustand der Schaltelemente zur Vermeidung eines Stromflusses oder einen niederohmigen Zustand der Schaltelemente zum Stromfluss schaltbar sind,
   - dass das Schutzschaltgerät derart ausgestaltet ist, dass die elektronischen Schalter (S1, S2, S3) unabhängig voneinander in einen hochohmigen oder niederohmigen Zustand schaltbar sind,
   - dass für jede Serienschaltung (SS1, SS2, SS3) jeweils mindestens ein Temperatursensor (TS1, TS2, TS3) vorgesehen ist, insbesondere zur jeweiligen Ermittlung der Höhe der Temperatur des jeweiligen elektronischen Schalters, insbesondere des halbleiterbasierten Schaltelementes,
   - dass das Schutzschaltgerät derart ausgestaltet ist,

   dass bei Überschreitung eines ersten Temperaturschwellwertes (1.SW) eines Temperatursensors einer Serienschaltung der elektronische Schalter der Serienschaltung in einen hochohmigen Zustand zur Vermeidung eines Stromflusses geschaltet wird, um eine Überhitzung zu vermeiden.

2. Schutzschaltgerät (SG) nach Patentanspruch 1,
   **dadurch gekennzeichnet,**

   **dass** für jede Serienschaltung (SS1, SS2, SS3) jeweils eine Stromsensoreinheit (SI1, SI2, SI3) vorgesehen ist, zur jeweiligen Ermittlung der Höhe des Stromes des jeweiligen Phasen-Leiters (L1, L2, L3),

   - **dass** eine Steuerungseinheit (SE) vorgesehen ist, die mit den Stromsensoreinheiten (SI1, SI2, SI3), den Temperatursensoren (TS1, TS2, TS3), den mechanischen Phasen-Kontakten (K1, K2, K3) und den elektronischen Schaltern (S1, S2, S3) verbunden ist,

   **dass** das Schutzschaltgerät derart ausgestaltet ist, dass bei Überschreitung mindestens eines ersten Stromschwellwertes in einem Phasen-Leiter eine Vermeidung eines Stromflusses des betreffenden Phasen-Leiters, insbesondere für eine erste Zeitdauer, durch den betreffenden elektronischen Schalter initiiert wird,

3. Schutzschaltgerät (SG) nach Patentanspruch 1 oder 2,

**dadurch gekennzeichnet,**
**dass** die mechanischen Phasen-Kontakte (K1, K2, K3) den lastseitigen Anschlüssen (LL1, LL2, LL3) und die elektronischen Schalter (S1, S2, S3) den netzseitigen Anschlüssen (LG1, LG2, LG3) zugeordnet sind.

4. Schutzschaltgerät (SG) nach Patentanspruch 1 oder 2,
   **dadurch gekennzeichnet,**

   **dass** ein netzseitiger Neutralleiter-Anschluss und ein lastseitiger Neutralleiter-Anschluss vorgesehen sind,
   **dass** ein mechanischer Neutralleiter-Kontakt vorgesehen ist, der den netzseitigen Neutralleiter-Anschluss mit dem lastseitigen Neutralleiter-Anschluss elektrisch verbindet,
   **dass** der mechanische Neutralleiter-Kontakt gemeinsam mit den mechanischen Phasen-Kontakten (K1, K2, K3) geschaltet wird.

5. Schutzschaltgerät (SG) nach einem der vorhergehenden Patentansprüche,
   **dadurch gekennzeichnet,**
   **dass** bei einem initiierten hochohmigen Zustand eines elektronischen Schalters zur Vermeidung der Überhitzung und bei Überschreitung eines höheren zweiten Temperaturschwellwertes (2.SW) die mechanischen Kontakte geöffnet werden.

6. Schutzschaltgerät (SG) nach einem der vorhergehenden Patentansprüche,
   **dadurch gekennzeichnet,**
   **dass** bei einem hochohmigen Zustand eines elektronischen Schalters zur Vermeidung der Überhitzung und Unterschreitung eines dritten Temperaturschwellwertes (3.SW) der elektronische Schalter in einen niederohmigen Zustand geschaltet wird.

7. Schutzschaltgerät (SG) nach Patentanspruch 6,
   **dadurch gekennzeichnet,**
   **dass** der dritte Temperaturschwellwert kleiner als der erste Temperaturschwellwert ist.

8. Schutzschaltgerät (SG) nach einem der vorhergehenden Patentansprüche 1 bis 5,
   **dadurch gekennzeichnet,**
   **dass** bei einem hochohmigen Zustand eines elektronischen Schalters zur Vermeidung der Überhitzung und Ablauf einer ersten Zeitspanne seit Eintreten des hochohmigen Zustandes zur Vermeidung der Überhitzung der elektronische Schalter in den niederohmigen Zustand geschaltet wird.

9. Schutzschaltgerät (SG) nach einem der vorhergehenden Patentansprüche,
   **dadurch gekennzeichnet,**
   **dass** bei einem eine erste Anzahl überschreitenden Wechsel in den hochohmigen Zustand zur Vermeidung der Überhitzung innerhalb eines ersten Zeitrahmens die mechanischen Kontakte geöffnet werden.

10. Schutzschaltgerät (SG) nach einem der vorhergehenden Patentansprüche,
    **dadurch gekennzeichnet,**
    **dass** eine mit der Steuerungseinheit (SE) verbundene Kommunikationseinheit (COM) vorgesehen ist.

11. Schutzschaltgerät (SG) nach Patentanspruch 10,
    **dadurch gekennzeichnet,**
    **dass** bei Überschreitung eines vierten Temperaturschwellwertes (4.SW) eines Temperatursensors eine Warnung mittels der Kommunikationseinheit (COM) abgegeben wird.

12. Schutzschaltgerät (SG) nach Patentanspruch 10 oder 11,
    **dadurch gekennzeichnet,**
    **dass** mittels der Kommunikationseinheit (COM) die Höhe der Temperatur ($T_{TS}$) mindestens eines Temperatursensors (TS) oder ein Äquivalent abgegeben wird.

13. Schutzschaltgerät (SG) nach einem der vorhergehenden Patentansprüche,
    **dadurch gekennzeichnet,**
    **dass** die mechanischen Kontakte durch die Steuerungseinheit (SE) geöffnet, aber nicht geschlossen werden können.

14. Schutzschaltgerät (SG) nach einem der vorhergehenden Patentansprüche,
    **dadurch gekennzeichnet,**
    **dass** die mechanischen Kontakte durch eine mechanische Handhabe (HH) bedienbar sind, um ein Öffnen der mechanischen Kontakte oder ein Schließen der mechanischen Kontakte zu schalten.

15. Schutzschaltgerät (SG) nach Patentanspruch 14,
    **dadurch gekennzeichnet,**
    **dass** die mechanischen Kontakte eine Freischaltfunktionalität aufweisen, derart das die mechanischen Kontakte durch die Steuerungseinheit (SE) geöffnet werden können, auch wenn die mechanische Handhabe (HH) blockiert ist.

16. Schutzschaltgerät (SG) nach einem der vorhergehenden Patentansprüche,
    **dadurch gekennzeichnet,**
    **dass** bei Überschreitung eines ersten Temperaturschwellwertes (1.SW) eines Temperatursensors einer Serienschaltung alle elektronischen Schalter in einen hochohmigen Zustand zur Vermeidung eines Stromflusses geschaltet werden, um eine Überhitzung zu vermeiden.

17. Verfahren für ein Schutzschaltgerät (SG) zum Schutz eines elektrischen Mehrphasen-Niederspannungswechselstromkreises aufweisend:

    - Serienschaltungen eines mechanischen Phasen-Kontaktes (K1, K2, K3) und eines elektronischen Schalters (S1, S2, S3), wobei jeweils eine Serienschaltung einen netzseitigen Phasen-Anschluss (LG1, LG2, LG3) mit einen lastseitigen Phasen-Anschluss (LL1, LL2, LL3) elektrisch verbindet,
    - dass die mechanischen Phasen-Kontakte (K1, K2, K3) zur Vermeidung eines Stromflusses gemeinsam geöffnet oder für einen Stromfluss gemeinsam geschlossen werden können,
    - dass die elektronischen Schalter (S1, S2, S3) mittels halbleiterbasierter Schaltelemente in einen hochohmigen Zustand der Schaltelemente zur Vermeidung eines Stromflusses oder einen niederohmigen Zustand der Schaltelemente zum Stromfluss geschaltet werden können,
    - dass die elektronischen Schalter unabhängig voneinander in einen hochohmigen oder niederohmigen Zustand geschaltet werden können, um einen phasenleiterabhängigen Stromfluss zu vermeiden oder zu ermöglichen,
    - dass für jede Serienschaltung (SS1, SS2, SS3) jeweils mindestens ein Temperatursensor (TS1, TS2, TS3) vorgesehen ist, insbesondere zur jeweiligen Ermittlung der Höhe der Temperatur des jeweiligen elektronischen Schalters, insbesondere des halbleiterbasierten Schaltelementes,
    - dass bei Überschreitung eines ersten Temperaturschwellwertes (1.SW) eines Temperatursensors einer Serienschaltung der elektronische Schalter der Serienschaltung in einen hochohmigen Zustand zur Vermeidung eines Stromflusses geschaltet wird, um eine Überhitzung zu vermeiden.

18. Verfahren nach Patentanspruch 17,
    **dadurch gekennzeichnet,**
    **dass** die Höhe des Stromes der jeweiligen Serienschaltung ermittelt wird und bei Überschreitung mindestens eines ersten Stromschwellwertes in einer Serienschaltung eine Vermeidung eines Stromflusses der betreffenden Serienschaltung, insbesondere für eine erste Zeitdauer, durch den betreffenden elektronischen Schalter initiiert wird.

19. Verfahren nach Patentanspruch 17 oder 18,
    **dadurch gekennzeichnet,**
    **dass** bei einem initiierten hochohmigen Zustand eines elektronischen Schalters zur Vermeidung der Überhitzung und bei Überschreitung eines höheren zweiten Temperaturschwellwertes (2.SW) die mechanischen Kontakte geöffnet werden.

20. Verfahren nach Patentanspruch 17, 18 oder 19,
    **dadurch gekennzeichnet,**
    **dass** bei einem hochohmigen Zustand eines elektronischen Schalters zur Vermeidung der Überhitzung und Unterschreitung eines dritten Temperaturschwellwertes (3.SW) der elektronische Schalter in einen niederohmigen Zustand geschaltet wird, insbesondere dass der dritte Temperaturschwellwert (3.SW) kleiner als der erste Temperaturschwellwert (1.SW) ist

21. Verfahren nach Patentanspruch 17, 18, 19 oder 20,
    **dadurch gekennzeichnet,**
    **dass** bei einem hochohmigen Zustand eines elektronischen Schalters zur Vermeidung der Überhitzung und Ablauf einer ersten Zeitspanne seit Eintreten des hochohmigen Zustandes zur Vermeidung der Überhitzung der elektronische Schalter in den niederohmigen Zustand geschaltet wird.

22. Verfahren nach Patentanspruch 17, 18, 19, 20 oder 21, **dadurch gekennzeichnet,**
    **dass** bei einem eine erste Anzahl überschreitenden Wechsel in den hochohmigen Zustand zur Vermeidung der Überhitzung innerhalb eines ersten Zeitrahmens die mechanischen Kontakte geöffnet werden.

23. Verfahren nach Patentanspruch 17, 18, 19, 20, 21 oder 22, **dadurch gekennzeichnet,**
    **dass** bei Überschreitung eines vierten Temperaturschwellwertes (4.SW) eine Warnung (Warn.) abgegeben wird.

24. Verfahren nach Patentanspruch 17, 18, 19, 20, 21, 22 oder 23,
    **dadurch gekennzeichnet,**
    **dass** die Höhe der Temperatur ($T_{TS}$) mindestens eines Temperatursensors oder ein Äquivalent abgegeben wird.

25. Verfahren nach Patentanspruch 17, 18, 19, 20, 21, 22, 23 oder 24,
    **dadurch gekennzeichnet,**
    **dass** bei Überschreitung eines ersten Temperaturschwellwertes (1.SW) eines Temperatursensors einer Serienschaltung alle elektronischen Schalter in einen hochohmigen Zustand zur Vermeidung eines Stromflusses geschaltet werden, um eine Überhitzung zu vermeiden.

# FIG 1

FIG 2

# FIG 3

FIG 4

FIG 5

FIG 6

FIG 7

Europäisches Patentamt

European Patent Office

Office européen des brevets

# EUROPÄISCHER RECHERCHENBERICHT

Nummer der Anmeldung

EP 23 20 0440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/066013 A1 (KUMAR BINESH [US] ET AL) 4. März 2021 (2021-03-04) | 1-4,6-8, 10-12, 16-18, 20,21, 23-25 | INV. H02H3/08 H01H9/54 H01H9/56 H02H5/04 |
| Y | * das ganze Dokument * | 13-15 | H02H7/22 |
| A | | 5,9,19, 22 | |
| | - - - - - | | |
| A | US 2017/256934 A1 (KENNEDY RYAN [US] ET AL) 7. September 2017 (2017-09-07) * das ganze Dokument * | 1-25 | |
| | - - - - - | | |
| A | WO 2022/136431 A1 (SIEMENS AG [DE]) 30. Juni 2022 (2022-06-30) * das ganze Dokument * | 1-25 | |
| | - - - - - | | |
| A | US 2013/300491 A1 (BOE OVE [NO] ET AL) 14. November 2013 (2013-11-14) * das ganze Dokument * | 1-25 | |
| | - - - - - | | **RECHERCHIERTE SACHGEBIETE (IPC)** |
| A | DE 10 2021 210820 A1 (SIEMENS AG [DE]) 30. März 2023 (2023-03-30) * das ganze Dokument * | 1-25 | G01R H02H H01H |
| | - - - - - | | |
| Y | DE 10 2021 210821 A1 (SIEMENS AG [DE]) 30. März 2023 (2023-03-30) * Absätze [0013], [0014] * | 13-15 | |
| | - - - - - | | |
| Y | DE 10 2021 210814 A1 (SIEMENS AG [DE]) 30. März 2023 (2023-03-30) * Absätze [0010], [0028], [0030] * | 13-15 | |
| | - - - - - | | |
| Y | DE 10 2021 210815 A1 (SIEMENS AG [DE]) 30. März 2023 (2023-03-30) * Absätze [0056], [0059], [0065] * | 13-15 | |
| | - - - - - | | |

Der vorliegende Recherchenbericht wurde für alle Patentansprüche erstellt

| Recherchenort | Abschlußdatum der Recherche | Prüfer |
|---|---|---|
| München | 10. Juli 2024 | Trifonov, Antoniy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**Nummer der Anmeldung**

EP 23 20 0440

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt
European
Patent Office
Office européen
des brevets

**MANGELNDE EINHEITLICHKEIT
DER ERFINDUNG
ERGÄNZUNGSBLATT B**

**Nummer der Anmeldung**

EP 23 20 0440

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-12, 16-25

   Schutzgerät und Verfahren zur Vermeidung von Überhitzung
   - - -

2. Ansprüche: 13-15

   Schutzgerät mit Freischaltfunktionalität
   - - -

**ANHANG ZUM EUROPÄISCHEN RECHERCHENBERICHT
ÜBER DIE EUROPÄISCHE PATENTANMELDUNG NR.**    EP 23 20 0440

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2024

| Im Recherchenbericht angeführtes Patentdokument | Datum der Veröffentlichung | Mitglied(er) der Patentfamilie | | Datum der Veröffentlichung |
|---|---|---|---|---|
| US 2021066013 A1 | 04-03-2021 | CN | 114342200 A | 12-04-2022 |
| | | EP | 4026213 A1 | 13-07-2022 |
| | | JP | 2022547639 A | 14-11-2022 |
| | | KR | 20220058919 A | 10-05-2022 |
| | | US | 2021066013 A1 | 04-03-2021 |
| | | US | 2022165528 A1 | 26-05-2022 |
| | | WO | 2021046097 A1 | 11-03-2021 |
| US 2017256934 A1 | 07-09-2017 | CN | 108885951 A | 23-11-2018 |
| | | CN | 112366104 A | 12-02-2021 |
| | | EP | 3424066 A1 | 09-01-2019 |
| | | EP | 3770936 A1 | 27-01-2021 |
| | | ES | 2848651 T3 | 11-08-2021 |
| | | US | 2017256934 A1 | 07-09-2017 |
| | | US | 2020083699 A1 | 12-03-2020 |
| | | WO | 2017151521 A1 | 08-09-2017 |
| WO 2022136431 A1 | 30-06-2022 | EP | 4238117 A1 | 06-09-2023 |
| | | US | 2024047958 A1 | 08-02-2024 |
| | | WO | 2022136431 A1 | 30-06-2022 |
| US 2013300491 A1 | 14-11-2013 | BR | 112013006956 A2 | 26-07-2016 |
| | | EP | 2567391 A1 | 13-03-2013 |
| | | US | 2013300491 A1 | 14-11-2013 |
| | | WO | 2012038237 A1 | 29-03-2012 |
| DE 102021210820 A1 | 30-03-2023 | CN | 118020134 A | 10-05-2024 |
| | | DE | 102021210820 A1 | 30-03-2023 |
| | | EP | 4377988 A1 | 05-06-2024 |
| | | WO | 2023052147 A1 | 06-04-2023 |
| DE 102021210821 A1 | 30-03-2023 | CN | 118020135 A | 10-05-2024 |
| | | DE | 102021210821 A1 | 30-03-2023 |
| | | EP | 4356412 A1 | 24-04-2024 |
| | | WO | 2023052107 A1 | 06-04-2023 |
| DE 102021210814 A1 | 30-03-2023 | CN | 118043923 A | 14-05-2024 |
| | | DE | 102021210814 A1 | 30-03-2023 |
| | | EP | 4367701 A1 | 15-05-2024 |
| | | WO | 2023052108 A1 | 06-04-2023 |
| DE 102021210815 A1 | 30-03-2023 | CN | 118043922 A | 14-05-2024 |
| | | DE | 102021210815 A1 | 30-03-2023 |
| | | EP | 4367700 A1 | 15-05-2024 |
| | | WO | 2023052081 A1 | 06-04-2023 |

EPO FORM P0461

Für nähere Einzelheiten zu diesem Anhang : siehe Amtsblatt des Europäischen Patentamts, Nr.12/82